(19) Europäisches Patentamt
European Patent Office
Office européen des brevets

(11) **EP 2 683 162 A1**

(12) **EUROPEAN PATENT APPLICATION**
published in accordance with Art. 153(4) EPC

(43) Date of publication:
08.01.2014 Bulletin 2014/02

(51) Int Cl.:
*H04N 7/173* (2011.01)          *G06F 3/01* (2006.01)
*G06F 3/048* (2013.01)          *G06F 17/30* (2006.01)
*G09F 19/00* (2006.01)

(21) Application number: 12754899.8

(22) Date of filing: 02.03.2012

(86) International application number:
PCT/JP2012/055429

(87) International publication number:
WO 2012/121160 (13.09.2012 Gazette 2012/37)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 04.03.2011 JP 2011047596

(71) Applicant: Nikon Corporation
Tokyo 100-8331 (JP)

(72) Inventor: NISHIGAKI, Koji
Tokyo 100-8331 (JP)

(74) Representative: Viering, Jentschura & Partner
Grillparzerstrasse 14
81675 München (DE)

(54) **ELECTRONIC DEVICE, IMAGE DISPLAY SYSTEM, AND IMAGE SELECTION METHOD**

(57)    The electronic device (100) includes an image-capturing unit (116) that captures an image of a subject, and generates image data, a sensor unit (110) that detects a physical quantity given by a user, a calculation unit (131) that calculates a score representing an emotional state of the user based on the physical quantity detected by the sensor unit(110), a storage unit (140) that stores in association with the image data generated by the image-capturing unit (116) and the score calculated by the calculation unit (131), and a selection unit (132) that selects the image data based on the score stored in the storage unit (140).

FIG. 1

EP 2 683 162 A1

## Description

Technical Field

The present invention relates to an electronic device, an image display system, and an image selection method.

Priority is claimed on Japanese Patent Application No. 2011-047596, filed March 4, 2011, the content of which is incorporated herein by reference.

Background Art

Currently, there is a digital signage (electronic signboard) that determines categories, such as gender and age using a real time camera, and displays an image according to the determined categories. In addition, Patent Document 1 discloses a display system which is made of a plurality of small devices arranged on a tile as one display.

Citation List

Patent Document

[Patent Document 1] Japanese Unexamined Patent Application, First Publication No. H11-134087

Summary of Invention

Technical Problem

However, in the digital signage of the related art, there is a problem in that it is not possible to display an image according to each user's preference.

The aspects of the present invention have an object to provide an electronic device, an image display system, and an image selection method, with which it is possible to automatically select the images preferred by the user.

Solution to Problem

An aspect of the present invention includes an image-capturing unit that captures an image of a subject, and generates image data, a sensor unit that detects a physical quantity given by a user, a calculation unit that calculates a score representing an emotional state of the user based on the physical quantity detected by the sensor unit and the image data generated by the image-capturing unit, a storage unit that correlatively stores the image data generated by the image-capturing unit and the score calculated by the calculation unit, and a selection unit that selects the image data based on the score stored in the storage unit.

Advantageous Effects of Invention

According to the aspects of the present invention, it is possible to automatically select the images preferred by the user.

Brief Description of Drawings

FIG. 1 is a block diagram illustrating a functional structure of an electronic device according to an embodiment of the present invention.
FIG. 2 is a schematic diagram illustrating a data structure and an example of data of a score table stored in the storage unit according to the present embodiment.
FIG. 3 is a schematic diagram illustrating a data structure and an example of data of a date score table stored in the storage unit according to the present embodiment.
FIG. 4 is a schematic diagram illustrating a data structure and an example of data of a location score table stored in the storage unit according to the present embodiment.
FIG. 5 is a schematic diagram illustrating a data structure and an example of data of an event score table stored in the storage unit according to the present embodiment.
FIG. 6 is a schematic diagram illustrating a data structure and an example of data of a weight table stored in the storage unit according to the present embodiment.
FIG. 7 is a schematic diagram illustrating a data structure and an example of data of a weight history table stored in the storage unit according to the present embodiment.
FIG. 8 is a flow chart illustrating a processing order for an image-capture score calculation process according to the present embodiment.
FIG. 9 is a flow chart illustrating a processing order for a display score calculation process according to the present embodiment.
FIG. 10 is a flow chart illustrating a processing order for an image selection display process according to the present embodiment.
FIG. 11 is a sequence diagram illustrating an operation of an image receiving process according to Example 1.
FIG. 12 is a sequence diagram illustrating an operation of an image display process according to Example 1.
FIG. 13 is a block diagram illustrating a structure of an image selection system according to Example 2.
FIG. 14 is a sequence diagram illustrating an operation of an image display process according to Example 2.
FIG. 15 is a sequence diagram illustrating an operation of an image display process according to Example 3.

Description of Embodiments

Hereinafter, an embodiment of the present invention will be described in detail with reference to the drawings.

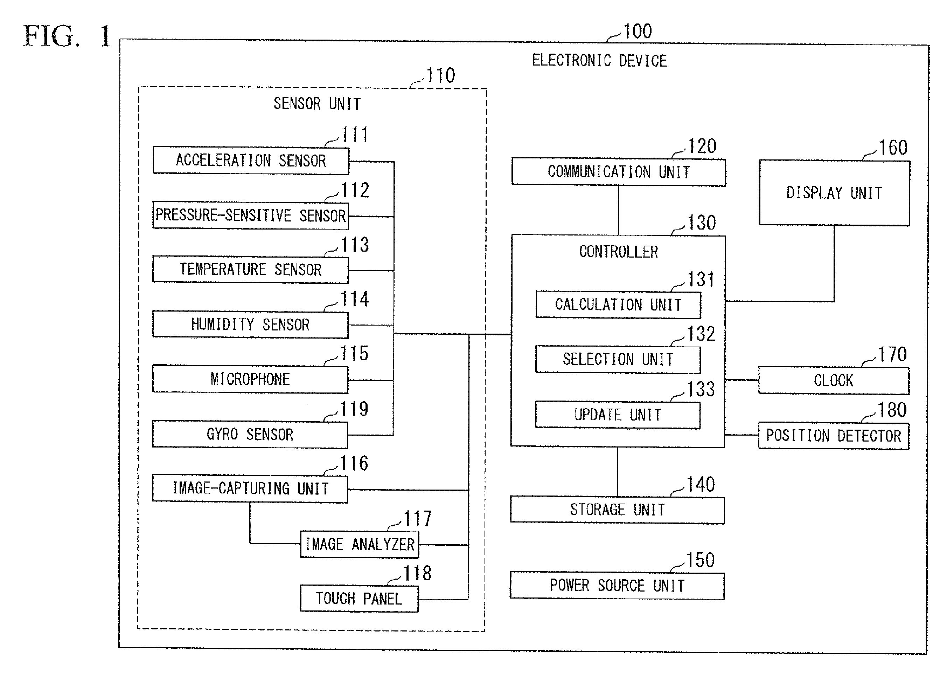

FIG. 1 is a block diagram illustrating a functional structure of an electronic device 100 according to an embodiment of the present invention.

The electronic device 100 is, for example, a mobile terminal such as a mobile handset, a personal digital assistant (PDA), a smart phone, a game device, and a digital camera. As illustrated in FIG. 1, the electronic device 100 according to the embodiment includes a sensor unit 110, a communication unit 120, a controller 130, a storage unit (weight storage unit) 140, a power source unit 150, a display unit 160, a clock 170, and a position detector 180.

The sensor unit 110 detects a physical quantity given by a user to the host device (that is, a pressure, a temperature and the like given to the electronic device 100 used by  the user) by various sensors and outputs a sensor signal for each type of detected physical quantity. The sensor unit 110 is configured to include an acceleration sensor 111, a pressure-sensitive sensor 112, a temperature sensor 113, a humidity sensor 114, a microphone 115, an image-capturing unit 116, an image analyzer 117, a touch panel 118, and a gyro sensor 119.

The acceleration sensor 111 detects acceleration due to a blow or vibration given by the user to the host device, and outputs the sensor signal corresponding to the detected acceleration to the controller 130. The acceleration sensor 111 detects, for example, the acceleration in a 0.2 [G] interval from 0.0 [G] to 2.0 [G] (in levels of 10-point scale). In addition, the acceleration sensor 111 may detect a period of the vibration given by the user to the host device based on the detected acceleration. The acceleration sensor 111 calculates the period of the vibration (frequency) in a 2 [Hz] interval from 0 [Hz] to 20 [Hz] (10-point scale). In addition, the acceleration sensor 111 may calculate the length of the continued time of the vibration given by the user to the host device based on the detected acceleration. The acceleration sensor 111 calculates, for example, the length of the continued time of the vibration given by the user to the host device in 1 [second] intervals from 0 [seconds] to 5 [seconds] (5-point scale)

The pressure-sensitive sensor 112 detects pressure given by the user to the host device (for example, the pressure due to the force of holding the housing), and outputs the sensor signal corresponding to the detected acceleration to the controller 130. The pressure-sensitive sensor 112 detects, for example, the pressure given by the user to the host device per each 5 [Pa] in 10-point scale.

The temperature sensor 113 detects a temperature given by the user to the host device (for example, the temperature of a palm holding the housing), and outputs the sensor signal corresponding to the detected temperature to the controller 130. The temperature sensor 113 detects, for example, the temperature given by the user to the host device from 35 [degrees Celsius] in 10-point scale every 0.2 [degrees Celsius].

The humidity sensor 114 detects a humidity given by the user to the host device (for example, the moisture content of the palm holding the housing), and outputs the sensor signal corresponding to the detected humidity to the controller 130. The humidity sensor 114 detects, for example, the humidity given by the user to the host device in a 10 [%] interval from 0 [%] to 100 [%] (10-point scale).

The microphone 115 detects a sound given by the user to the host device (for example, the volume and frequency of the voice of the user), and outputs the sensor signal corresponding to the detected sound to the controller 130. For example, the microphone 115 outputs the sensor signal corresponding to the length of the continued time of the voice. Here, for example, the microphone 115 detects the length of the continued time of the user's voice in 1 [second] intervals from 0 [seconds] to 5 [seconds] (5-point scale), and outputs the sensor signal corresponding to the length of the continued time of the detected voice.

The image-capturing unit 116 captures an optical image (subject) and generates image data, and outputs the generated image data to the controller 130 and the image analyzer 117.

The image analyzer 117 performs, in a case where a person's face is included in  the input image data, pattern matching with respect to the image data. Then, the image analyzer 117 causes the image data on which the pattern matching is performed, to correspond to any one or more of the emotion auxiliary information of "joy", "anger", "sorrow", and "pleasure" which represent the user's emotional state. For example, in a case where the user's face is detected to be a laughing face by a result of performing the pattern matching, the image analyzer 117 causes the image data in which the user's laughing face is captured, to correspond to the emotion auxiliary information of "joy" and "pleasure".

The image analyzer 117 causes the image data to correspond to the emotion auxiliary information and outputs the image data in which the user's face is captured, to the controller 130.

The touch panel 118 is installed on the display unit 160, and receives the user's operational input. Here, the user's operations corresponding to each of the emotion auxiliary information "joy", "anger", "sorrow", and "pleasure" are stored in advance. For example, in a case where the user inputs the operation corresponding to "joy", the touch panel 118 outputs the sensor signal indicating the emotion auxiliary information "joy", to the controller 130. In addition, in a case where the user inputs the operation corresponding to emotion auxiliary information "anger", "sorrow" and "pleasure" also, the touch panel 118 similarly outputs the corresponding sensor signal.

The gyro sensor 119 detects an angle and an angular velocity of the host device, and outputs the sensor signal corresponding to the detected angle and the angular velocity to the controller 130. The gyro sensor 119 detects, for example, the direction of the host device in 10-point scale, from the angle and the angular velocity of the host device.

The controller 130 performs overall control of the electronic device 100 and is configured to include a calculation unit 131, a selection unit 132, and an update unit 133. When the image-capturing unit 116 captures an image of the subject, the calculation unit 131 calculates a "score" representing the user's emotional state based on the sensor signal input from the sensor unit 110. The method of calculating the "score" will be described below.

The calculation unit 131 calculates the score when the image-capturing unit 116 captures the image of the subject, and writes the calculated score into the storage unit 140 as an image-capture score, in association with the image data of the subject. (Alternatively, the storage unit 140 stores the score calculated by the calculation unit 131 when the image-capturing unit 116 captures the image of the subject, as an image-capture score, in association with the image data of the subject.) In addition, when the image data stored in the storage unit 140 is displayed on the display unit 160, the calculation unit 131 calculates the score based on the sensor signal input from the sensor unit 110, and writes the calculated score as a display score into the storage unit 140 in association with the displayed image data. In addition, the calculation unit 131 calculates the average value of the score in one day and scores the calculated score as a date score in the storage unit 140 in associated with each date. In addition, the calculation unit 131 calculates the score for each location (position) detected by the position detector 180 and stores the calculated score as a location score in the storage unit 140 in association with each position.

Hereinafter, the method of calculating the score will be described. The calculation unit 131 calculates the score by multiplying the level of the input sensor signal by a coefficient of each type of detected physical quantity. Here, the coefficient is determined in advance for each type of the physical quantity. The score represents the user's emotion that if the value thereof is larger, the user's emotion is better (joy or pleasure), and if the value thereof is smaller, the user's emotion is worse (anger or sorrow).

For example, the calculation unit 131 multiplies the level of the sensor signal corresponding to the acceleration by the coefficient determined in advance corresponding to the detected acceleration. In addition, the calculation unit 131 multiplies the level of the sensor signal corresponding to the frequency of the vibration by the coefficient determined in advance corresponding to the frequency of the detected vibration.

With respect to the case of the pressure, the temperature, the humidity, and the volume of the sound, the calculation by the calculation unit 131 is similar.

In addition, the calculation unit 131 acquires the emotion auxiliary information from the touch panel 118. In addition, the calculation unit 131 acquires the emotion auxiliary information from the image analyzer 117. In a case where the calculation unit 131 acquires the emotion auxiliary information from at least any one of the image analyzer 117 or the touch panel 118, the calculation unit 131 converts the acquired emotion auxiliary information to the score. For example, the calculation unit 131 holds a table in which the score corresponding to the emotion auxiliary information is stored, and reads out the score corresponding to the acquired emotion auxiliary information from the table. On the other hand, in a case where the calculation unit 131 does not acquire the emotion auxiliary information from both of the image analyzer 117 and the touch panel 118, the calculation unit 131 determines the emotion auxiliary information based on the frequency of the voice detected by the microphone 115 of the sensor unit 110, and converts the determined emotion auxiliary information to the score. Here, the calculation unit 131 determines which one of laughing (joy, pleasure), sobbing (sorrow), or wailing (anger) the user's voice is categorized as, based on the frequency of the voice.

Specifically, if the user is a male, the calculation unit 131 determines that, for example, when the frequency of the voice is lower than 100 [Hz], the voice is categorized as "sobbing", when the frequency of the voice is equal to or higher than 100 [Hz] and lower than 350 [Hz], the voice is categorized as "wailing", and when the frequency of the voice is equal to or higher than 350 [Hz], the voice is categorized as "laughing voice". On the other hand, if the user is a female, the calculation unit 131 determines that, for example, when the frequency of the voice is lower than 250 [Hz], the voice is categorized as "sobbing", when the frequency of the voice is greater than or equal to 250 [Hz] and lower than 500 [Hz], the voice is categorized as "wailing", and when the frequency of the voice is greater than or equal to 500 [Hz], the voice is categorized as "laughing voice"

The selection unit 132 selects the image data based on the score stored in the storage unit 140.

The details of the image selection process in the selection unit 132 will be described below. The update unit 133 performs a feedback process for updating the weight of each score when the image data is selected by the selection unit 132 based on the score calculated by the calculation unit 131. The details of the feedback process in the update unit 133 will be described below.

The communication unit 120 performs a wireless communication with other electronic devices 100. In addition, the communication unit (transmission unit) 120 transmits the image data selected by the selection unit 132 to other electronic devices 100. In addition, the communication unit (transmission unit) 120 receives the score corresponding to the image data, from other electronic devices 100. The storage unit 140 stores a score table indicating the score corresponding to the image data, a date score table indicating the score corresponding to the date, a location score table indicating the score corresponding to the location an event score table indicating the score corresponding to an event such as a birthday, a weight table indicating the weight with respect to each score, and a weight history table indicating a weight history at the time of the image selection process. The details of each table will be described below.

The power source unit 150 supplies power to each unit. The display unit 160 is a display device such as a liquid crystal display, and the touch panel 118 is installed thereon. In addition, the display unit 160 displays the image data. The clock 170 measures the year, month, date, and time. The position detector 180 on which a Global Positioning System (GPS) is mounted, for example, detects the location (position) of the electronic device 100.

Next, various tables stored in the storage unit 140 will be described.

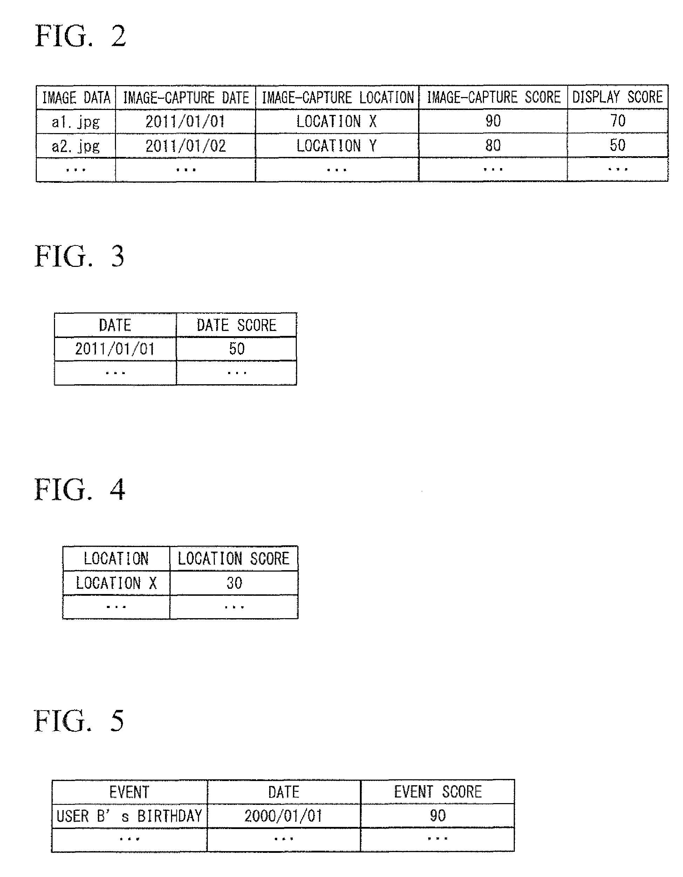

FIG. 2 is a schematic diagram illustrating a data structure and an example of data of the score table stored in the storage unit 140 according to the present embodiment. As illustrated in the diagram, the score table is data in two-dimensional table form having rows and columns, and includes each column of image data, an image-capture date, an image-capture location, an image-capture score, and a display score. Each row of the table is present for each image data. The image data is identification information which identifies the image data, and is a file name in the present embodiment. The image-capture date is a date (year, month, and date) when the image data is captured. The image-capture location is a location where the image data is captured. The image-capture score is a score at the time when the image data is captured. The display score is a score at the time when the image data is displayed.

In the example illustrated in the diagram, with respect to the image data "al.jpg", the image-capture date is "2011/01/01", the image-capture location is "location X", the image-capture score is "90", and the display score is "70". In addition, with respect to the image data "a2.jpg", the image-capture date is "2011/01/02", the image-capture location is "location Y", the image-capture score is "80", and the display score is "50".

FIG. 3 is a schematic diagram illustrating a data structure and an example of data of a date score table stored in the storage unit 140 according to the present embodiment. As illustrated in the diagram, the date score table is data in two-dimensional table form having rows and columns, and includes each column of the date (year, month, and date), and the date score. Each row of the table is present for each date. The date score is an average value of the scores in a day. In the illustrated example, the date score corresponding to the date "2011/01/01" is "50".

FIG. 4 is a schematic diagram illustrating a data structure and an example of data of a location score table stored in the storage unit 140 according to the present embodiment. As illustrated in the diagram, the location score table is data in two-dimensional table form having rows and columns, and includes each column of the location and the location score. Each row of the table is present for each location. The location score is the score at each location. As illustrated in the diagram, the location score corresponding to the location "location X" is "30".

FIG. 5 is a schematic diagram illustrating a data structure and an example of data of an event score table stored in the storage unit 140 according to the present embodiment. As illustrated in the diagram, the event score table is data in two-dimensional tabular form having rows and columns, and has each column of the event, the date, and the event score. Each row of the table is present for each event. The events are set by the user in advance such as the user's birthday and the like. The date is that of an event (year, month, and date). The event score is an average value of date score of the events in a day. In the illustrated example, the date corresponding to the event "user B's birthday" is "2000/01/01" and the event score is "90" which is an average value of the date scores on January 1 from the year 2000 to 2011.

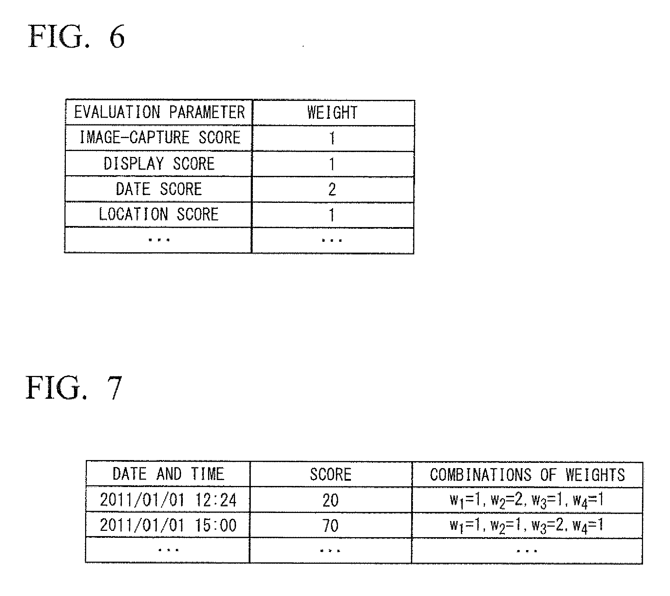

FIG. 6 is a schematic diagram illustrating a data structure and an example of data of a weight table stored in the storage unit 140 according to the present embodiment. As illustrated in the diagram, the weight table is data in two-dimensional tabular form having rows and columns and has each column of the evaluation parameter and the weight. Each row of the table is present for each evaluation parameter. The evaluation parameter is a type of score used when the image data is selected by the selection unit 132. The weight is the weight corresponding to the evaluation parameter. In the illustrated example, the weight corresponding to the evaluation parameter "image-capture score" is "1", the weight corresponding to the evaluation parameter "display score" is "1", the weight corresponding to the evaluation parameter "date score" is "2", and the weight corresponding to the evaluation parameter "location score" is "1".

FIG. 7 is a schematic diagram illustrating a data structure and an example of data of a weight history table stored in the storage unit 140 according to the present embodiment. As illustrated in the diagram, the weight history table is data in two-dimensional tabular form having rows and columns, and has each column of the date and time, the score, and the combination of the weights. Each row of the table is present for each date and time. The date and time is the year, month, date and time when the image selection display process is performed, which will be described below. The score is a score when the image selection display process is performed. The combination of the weights is the weight of the evaluation parameters used at the time when the image selection display process is performed. In the illustrated example, the score at the time of image selection display process being performed on "2011/01/01, 12:24" is "20", and the weight combinations are; "the weight of the image-capture score $w_1$ = 1, the weight of the display score $w_2$ = 2, the weight of the date score $w_3$ = 1, and the weight of the location score $w_4$ = 1. The score at the time of image selection display process being performed on "2011/01/01 15:00" is "70", and the weight combinations are; "the weight of the image-capture score $w_1$ = 1, the weight of the display score $w_2$ = 1, the weight of the date score $w_3$ = 2, and the weight of the location score $w_4$ = 1.

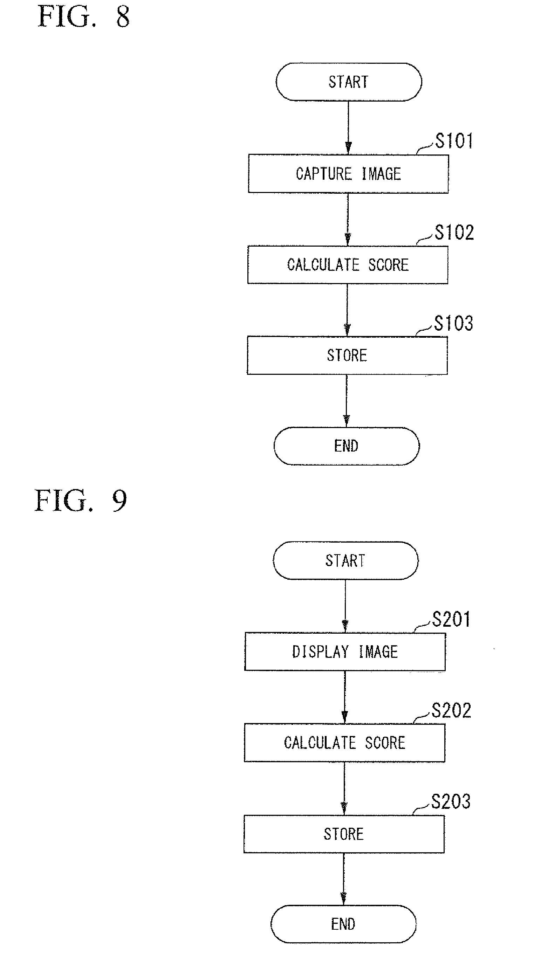

Next, the image-capture score calculation process by the electronic device 100 will be described with reference to FIG. 8.

FIG. 8 is a flow chart illustrating a processing order of an image-capture score calculation process according to the present embodiment.

When the image-capture instruction is input via the touch panel 118, first, the image-capturing unit 116 captures the image of the subject and generates the image data in STEP S101. The controller 130 writes the image data generated by the image-capturing unit 116 into the storage unit 140.

Next, in STEP S102, the calculation unit 131 calculates the score based on the sensor signal input from the sensor unit 110, and sets the calculated score as the image-capture score. In addition, the calculation unit 131 acquires the current date (year, month, and date) from the clock 170, and sets the acquired date as the image-capture date. In addition, the calculation unit 131 acquires the current position of the host device (location) from the position detector 180, and sets the acquired position (location) as the image-capture location.

Lastly, in STEP S103, the calculation unit 131 correlatively writes the calculated image-capture score, the acquired image-capture date, the acquired image-capture location, and the captured image data into the score table.

Next, the display score calculation process by the electronic device 100 will be described with reference to FIG. 9.

FIG. 9 is a flow chart illustrating a processing order of a display score calculation process according to the present embodiment.

When the display instruction for the image data is input via the touch panel 118, first, the controller 130 reads the image data selected by the user from the storage unit 140, and displays the read image data on the display unit 160 in STEP 201.

Next, in STEP S202, the calculation unit 131 calculates the score based on the sensor signal input from the sensor unit 110, and sets the calculated score as the display score.

Lastly, in STEP S203, the calculation unit 131 writes the calculated display score into the score table in association with the displayed image data. However, in a case where the display score of the displayed image data is already set in the score table, the calculation unit 131 calculates the average value of the display score already set and the calculated display score, and writes the calculated average value into the score table as the display score corresponding to the displayed image data.

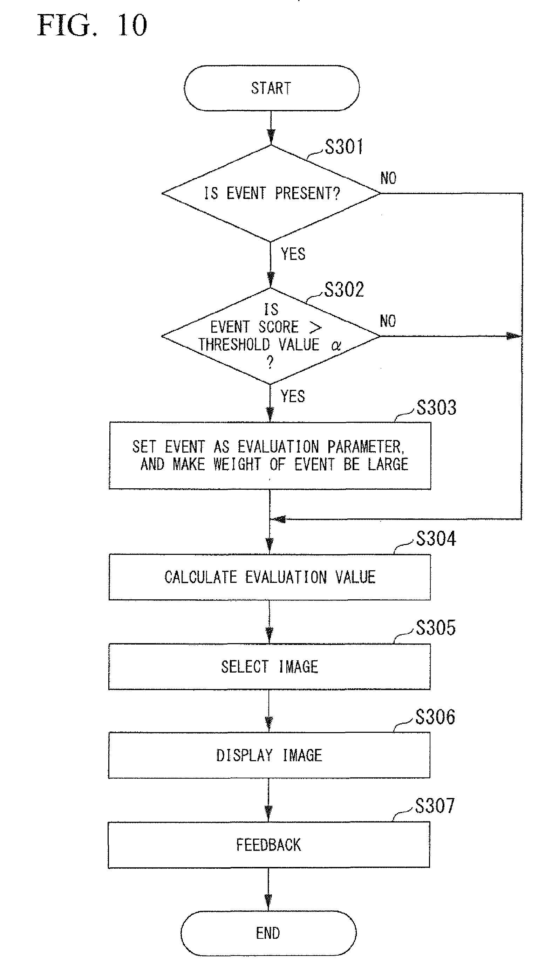

Next, the image selection display process by the electronic device 100 will be described with reference to FIG 10.

FIG. 10 is a flow chart illustrating a processing order of an image selection display process according to the present embodiment.

When the selection display instruction for displaying a plurality of automatically selected image data is input from the user via the touch panel 118, first, in STEP S301, the selection unit 132 acquires the date of today from the clock 170 and determines whether the event that matches the acquired date (month and day) is present in the event table or not. If the event that matches the acquired date is present, then the process proceeds to STEP S302, and if the event that matches the acquired date is not present, then the process proceeds to STEP S304.

Next, in STEP S302, the selection unit 132 determines whether or not the event score of the event that matches the date of today is larger than the predetermined threshold value $\alpha$. If the event score is larger than the threshold value $\alpha$, then the process proceeds to STEP S303, and if the event score is less than or equal to the threshold value $\alpha$, then the process proceeds to STEP S304.

Next, in STEP S303, the selection unit 132 sets the event that matches the date of today (for example, user B's birthday) as the evaluation parameter. At this time, the weight $w_5$ of the event (user B's birthday) is set to be larger than the weight of the other evaluation parameter.

Next, in STEP S304, the selection unit 132 calculates the evaluation value of each image data based on the score $s_i$ and the weight $w_i$ of each evaluation parameter. Specifically, the selection unit 132 calculates the evaluation value P of each image data by following formula (1).

[Formula 1]

$$ P = \sum_{i=1}^{n} s_i \cdot w_i \qquad \cdots (1) $$

Here, n is the number of evaluation parameters. In addition, $s_1$ is the image-capture score, $s_2$ is the display score, $s_3$ is the date score on the date of the image-capturing, and $s_4$ is the location score on the location of the image-capturing. In addition, $w_1$ is the weight of the image-capture score, $w_2$ is the weight of the display score, $w_3$ is the weight of the date score, and $w_4$ is the weight of the location score. Here, in a case where the event (for example, user B's birthday) is the evaluation parameter, the selection unit 132 sets the $s_5$ as $s_5$ = event score "90" for the image data of which the image-capture date (month, date) matches the date "01/01", and sets the $s_5$ as $s_5$ = "0" for the image data of which the image-capture date (month, date) does not match the date "01/01".

Subsequently, in STEP S305, the selection unit 132 selects the predetermined number of image data (for example, 9 image data) in a descending order of evaluation value.

Then, in STEP S306, the selection unit 132 displays the plurality of selected image data on the display unit 160. At this time, for example, the selection unit 132 displays the selected image data selected by a slide show, in an order.

Lastly, in STEP S307, the update unit 133 performs the feedback process. Specifically, first, the calculation unit 131 calculates the score based on the sensor signal from the sensor unit 110. Next, the calculation unit 131 writes the current date and time, the calculated score, the weight of each evaluation parameter in the weight table into the weight history table in association with each other. Next, the update unit 133 updates the weight of each evaluation parameter in the weight table based on the score calculated by the calculation unit 131. For example, in a case where the calculated score is smaller than the predetermined value, the update unit 133 reads the combination of the weights of the large scores from the weight history table, and sets the read combination of the weights as the weight of each evaluation parameter in the weight table. On the other hand, the update unit 133 does not update the weight of the evaluation parameter in a case where the calculated score is larger than the predetermined value.

Here, in the image selection and display process, the image data may be selected in consideration of the current location of the host device. For example, the selection unit 132 acquires the current location of the electronic device 100 from the position detector 180, and reads the location score corresponding to the acquired location from the location score table. Then, in a case where the read location score is larger than the predetermined value, the selection unit 132 sets the weight of the location score to be large. Alternatively, in a case where the read location score is larger than the predetermined value, the selection unit 132 may add the current location to the evaluation parameter.

In this way, according to present embodiment, the electronic device 100 automatically selects and displays the image data based on the score representing the user's emotional state. As a result, the user can automatically select and display the preferred image data by a simple operation without having to select it manually.

In addition, since the weight of each evaluation parameter is updated based on the score at the time when a plurality of image data are automatically selected, it is possible for the electronic device 100 to select the image data according to the user's preference with high accuracy.

Hereinafter, an image selection system using the electronic device 100 according to the present embodiment will be described with Examples.

Example 1

The image selection system according to the present Example is configured to include a plurality of electronic devices 100.

Hereinafter, for the convenience of description, reference symbols A and B are assigned to each of the two electronic devices 100 which will be referred to as the electronic device 100A and electronic device 100B. Regarding the matters common in both of the electronic device 100A and the electronic device 100B, the code A and B will be omitted and simply referred to as "electronic device 100" or "each electronic device 100".

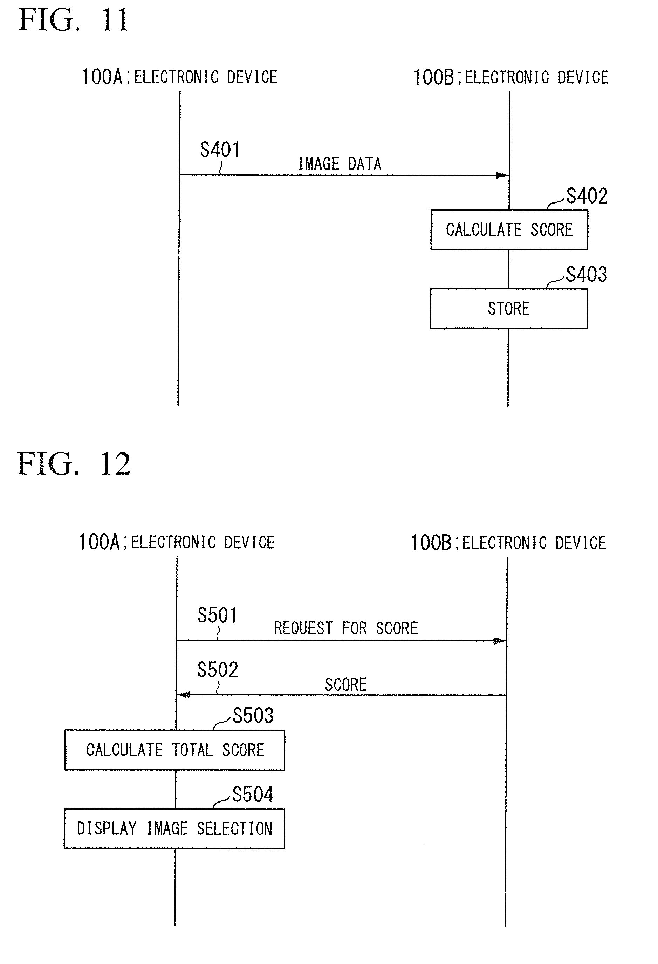

FIG. 11 is a sequence diagram illustrating an operation of an image receiving process according to the present Example.

When the user operates to transmit the image data via the touch panel 118, first, in STEP S401, the controller 130 of the electronic device 100A reads the image data selected by the user from the storage unit 140, and transmits the read image data to the electronic device 100B via the communication unit 120. The controller 130 of the electronic device 100B stores the received image data in the storage unit 140 when the image data is received from the electronic device 100A via communication unit 120.

Then, in STEP S402, the calculation unit 131 of the electronic device 100B calculates the score based on the sensor signal from the sensor unit 110, and sets the calculated score as the display score.

Lastly, in STEP S403, the calculation unit 131 of the electronic device 100B writes the display score into the score table in association with the received image data.

FIG. 12 is a sequence diagram illustrating an operation of an image display process according to the present Example.

When the selection display instruction is input by the user via the touch panel 118, first, in STEP S501, the controller 130 of the electronic device 100A transmits a request for the score which is data for requesting the score, to another electronic device 100B which can be communicated with, via the communication unit 120.

In STEP S502, the controller 130 of the electronic device 100B reads, when the request for the score is received via the communication unit 120, the score from the storage unit 140, and transmits the read score to the electronic device 100A. Here, the transmitted score is the image-capture score and the display score of the image data, the date score of each date, the location score of each location, and the event score of each event.

In STEP S503, when the score is received from the electronic device 100B via the communication unit 120, the calculation unit 131 of the electronic device 100A calculates the total value (total score) of each score received from the electronic device 100B and each score stored in the storage unit 140. Specifically, the calculation unit 131 calculates the total value of the image-capture score of the electronic device 100A and the image-capture score of the electronic device 100B for each image data. In addition, the calculation unit 131 calculates the total value of the display score of the electronic device 100A and the display score of the electronic device 100B for each image data. In addition, the calculation unit 131 calculates the total value of the date score of the electronic device 100A and the date score of the electronic device 100B for each date. In addition, the calculation unit 131 calculates the total value of the location score of the electronic device 100A and the location score of the electronic device 100B for each location. In addition, the controller 130 calculates the total value of the event score of the electronic device 100A and the event score of the electronic device 100B for each event.

Then, in STEP S504, the selection unit 132 of the electronic device 100A performs the image selection display process based on the calculated total score. The image selection display process is similar to the process illustrated in FIG 10.

Furthermore, the case of calculating the total score between two electronic devices 100 in the present Example is described. However, the total score among more than three electronic devices 100 may also be calculated.

In this way, according to the present Example, the electronic device 100 calculates the total score of the plurality of electronic devices 100, and selects the image data based on the total score. As a result, it is possible to automatically select and display the preferred image data of a plurality of users (both of the user A of the electronic device 100A and user B of the electronic device 100B). That is, the electronic device 100 can automatically select the image data based on the relationship of the plurality of users.

Example 2

Next, the Example 2 will be described. The Example 2 is a modification example of the Example 1.

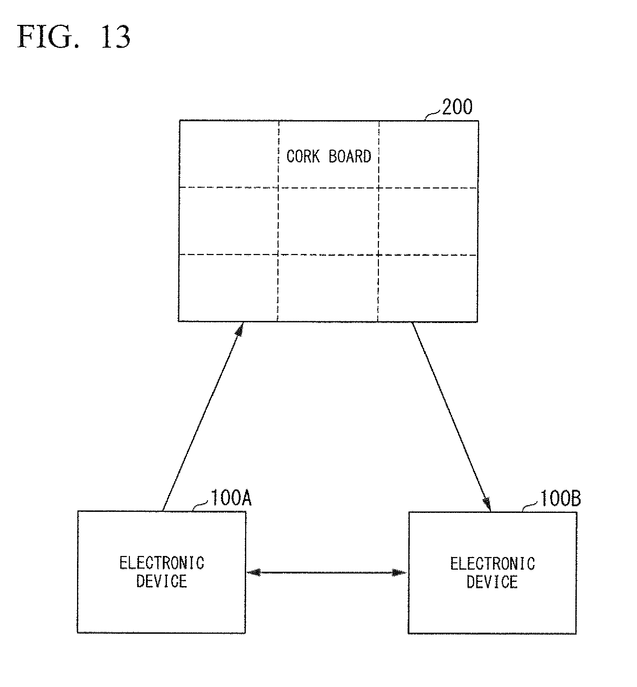

FIG. 13 is a block diagram illustrating a structure of an image selection system according to the present Example.

The image selection system according to the present Example is configured to include a plurality of electronic devices 100 and a cork board 200. The cork board 200 is configured from a plurality of electronic devices 100. In the present Example, the cork board 200 is configured from nine electronic devices 100 arranged by vertical 3 x horizontal 3 in a tile shape to make one display (display apparatus).

In the present Example, the description will be made with an example of a case where the cork board 200 is installed in a restaurant, and the user A of the electronic device 100A and the user B of the electronic device 100B are the guests of the restaurant, and it is a birthday of the user B today.

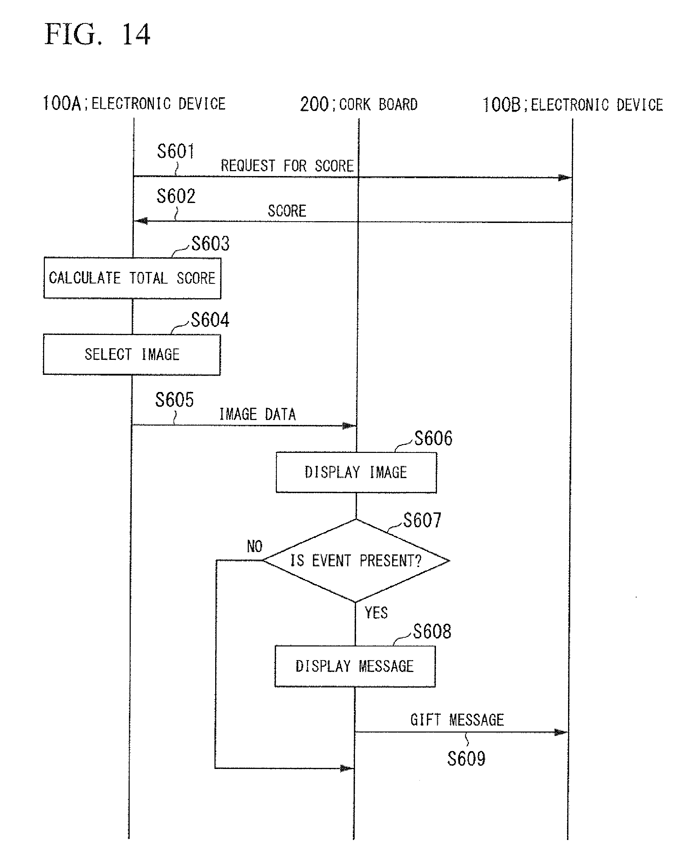

FIG. 14 is a sequence diagram illustrating an operation of an image display process according to the present Example.

When a selection transmission instruction instructing the plurality of image data be automatically selected and transmitted from the user via the touch panel 118 is input, first, in STEP S601, the controller 130 of the electronic device 100A transmits a request for the score to another electronic device 100B which can be communicated with, via the communication unit 120.

In STEP S602, when the request for the score is received via the communication unit 120, the controller 130 of the electronic device 100B reads the score from the storage unit 140, and transmits the read score to the electronic device 100A.

In STEP S603, when the score is received from the electronic device 100B, the calculation unit 131 of the electronic device 100A calculates the total value (total score) of each score received from the electronic device 100B and each score stored in the storage unit 140 respectively.

Then, in STEP S604, the selection unit 132 of the electronic device 100A selects nine image data by the image selection process based on the calculated total score. The image selection process is similar to the processes illustrated from STEP S301 to STEP S305 in FIG. 10.

Next, in STEP S605, the selection unit 132 of the electronic device 100A transmits the nine selected image data, the evaluation parameter used at the time of the image selection process, the weight of each evaluation parameter, and the address of the electronic device 100B to the cork board 200 via the communication unit 120.

In STEP S606, when the nine image data is received, the cork board 200 displays the received nine image data on each electronic device 100 that configures the cork board 200.

Next, in STEP S607, the cork board 200 determines whether or not the event is included in the received evaluation parameter. In a case where the event is included in the evaluation parameter, the process proceeds to STEP S608. On the other hand, in a case where the event is not included in the evaluation parameter, the process ends.

In a case where the event is included in the evaluation parameter, in STEP S608, the cork board 200 displays the message corresponding to the event. In the present Example, since the event included in the evaluation parameter is "user B's birthday", the cork board 200 displays the message saying "Congratulations on your birthday".

Then, in STEP S609, the cork board 200 transmits the gift message saying "There is a gift from the shop, will you receive it?" to the user B's electronic device 100B.

When the user B performs the operation of willingness to receive the gift on the electronic device 100B, the electronic device 100B transmits the data of willingness to receive the gift to a terminal installed in the restaurant. The terminal notifies the fact that data of willingness to receive the gift is received, to a sales clerk. The sales clerk who acknowledged the data sends the gift from the restaurant to the user B.

In this way, according to the present Example, the user A can display the image data preferred by both of the user A and the user B on the cork board 200 without having to select it manually. In addition, since the cork board 200 performs the process (displaying the message and transmitting the gift message) based on the evaluation parameter received from the electronic device 100A, it is possible to provide various services based on the relationship of the user A and the user B.

Example 3

Next, the Example 3 will be described.

The image selection system according to the present Example is configured to include one or more electronic devices 100 and cork board 200. The cork board 200 in the present Example is a digital signage which performs an electronic advertisement.

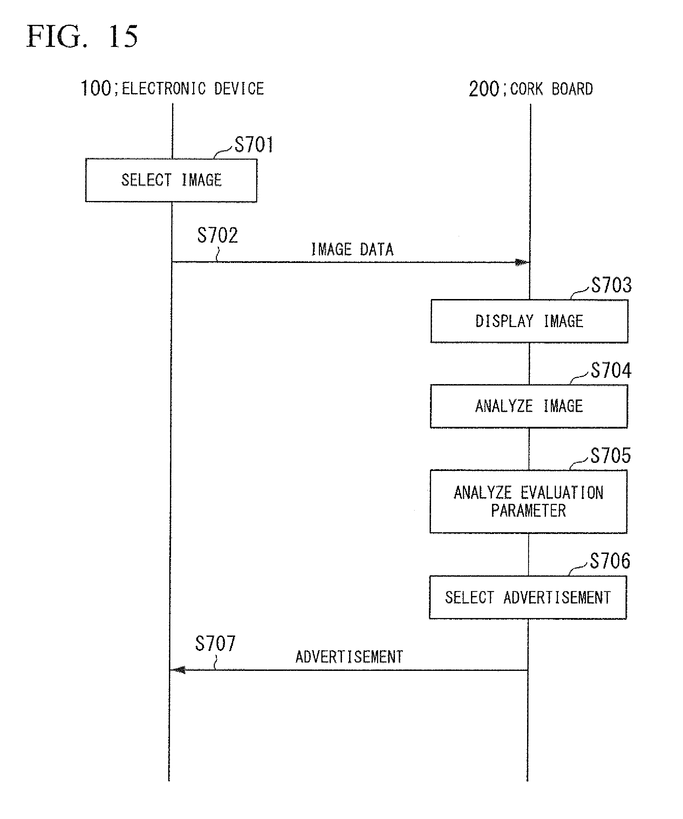

FIG. 15 is a sequence diagram illustrating an operation of an image display process according to the present Example.

First, in STEP S701, when a selection transmission instruction is input by the user via the touch panel 118, the selection unit 132 of the electronic device 100 selects nine image data by the image selection process. The image selection process is similar to the process from STEP S301 to S305 in FIG 10.

Next, in STEP S702, the selection unit 132 of the electronic device 100 transmits the nine selected image data, the evaluation parameter used at the time of the image selection process, the weight of each evaluation parameter, and the information of the selected image data (for example, image-capture location, image-capture date and time, and the like) to the cork board 200.

In STEP S703, when the nine image data is received, the cork board 200 displays the received nine image data on each electronic device 100 respectively that configures the cork board 200.

Next, in STEP S704, the cork board 200 analyzes the received image data. Specifically, the cork board 200 analyzes the state of the subject in the image data (for example, a specific person who is playing soccer is reflected, and the like) by the pattern matching.

Next, in STEP S705, the cork board 200 analyzes the received evaluation parameter. For example, in a case where the weight of the evaluation parameter "location score" is large, the cork board 200 sets the image-capture location (for example, image-capture location = "Italy") of the received image data as the analysis result.

Then, in STEP S706, the cork board 200 selects the advertisement data based on the analysis result of the image data and the evaluation parameter. The advertisement data is stored in the cork board 200 in advance. For example, in a case where the analysis result of the image data is "He is playing soccer" and the analysis result of the evaluation parameter is "image-capture location = Italy", the cork board 200 selects the advertisement data of a trip to Italy.

Lastly, in STEP S707, the cork board 200 transmits the selected advertisement data to the electronic device 100.

In this way, according to the present Example, the user of the electronic device 100 can display his preferred image data on the cork board 200 without having to select for himself. In addition, since the cork board 200 selects the advertisement based on the evaluation parameter received from the electronic device 100, it is possible to provide the advertisement in accordance with the user of the electronic device 100.

As described above, an embodiment of the present invention is described in detail with reference to the drawings. However, the detailed structure is not limited to the above description, and a variety of design changes or modifications can be made without departing from the scope of the present invention.

Reference Signs List

| | |
|---|---|
| 100 | electronic device |
| 110 | sensor unit |
| 111 | acceleration sensor |
| 112 | pressure-sensitive sensor |
| 113 | temperature sensor |
| 114 | humidity sensor |
| 115 | microphone |
| 116 | image-capturing unit |
| 117 | image analyzer |
| 118 | touch panel |
| 119 | gyro sensor |
| 120 | communication unit |
| 130 | controller |

131    calculation unit

132    selection unit

140    storage unit

150    power source unit

160    display unit

170    clock

180    position detector

**Claims**

1.  An electronic device, comprising:

    an image-capturing unit that captures an image of a subject, and generates image data;
    a sensor unit that detects a physical quantity given by a user;
    a calculation unit that calculates a score representing an emotional state of the user based on the physical quantity detected by the sensor unit and the image data generated by the image-capturing unit;
    a storage unit that correlatively stores the image data generated by the image-capturing unit and the score calculated by the calculation unit; and
    a selection unit that selects the image data based on the score stored in the storage unit.

2.  The electronic device according to Claim 1, further comprising:

    a receiving unit that receives a score corresponding to image data from another electronic device,
    wherein the selection unit selects the image data based on the score received by the receiving unit and the score stored in the storage unit.

3.  The electronic device according to Claim 1 or 2, further comprising:

    a display unit that displays the image data,
    wherein the storage unit stores an image-capture score which is the score calculated by the calculation unit when the image data is generated, and a display score which is the score calculated by the calculation unit when the image data is displayed, in association with the image data,
    wherein the device comprises a weight storage unit that stores a weight of the image-capture score and a weight of the display score, and

    wherein the selection unit selects the image data based on a value obtained by multiplying each score stored in the storage unit by each weight respectively.

4.  The electronic device according to Claim 3, further comprising:

    a clock that measures a date and a time,
    wherein the storage unit stores a date on which the image data is generated and a date score which is a score calculated by the calculation unit on the same date, and
    wherein the weight storage unit stores a weight of the date score.

5.  The electronic device according to Claim 3 or 4, further comprising:

    a position detector that detects a position,
    wherein the storage unit stores a position where the image data is generated and a location score which is a score calculated by the calculation unit on the same position, and
    wherein the weight storage unit stores the weight of the location score.

6.  The electronic device according to any one of Claims 3 to 5, further comprising:

    an update unit that updates the weight of each score stored in the weight storage unit based on the score calculated by the calculation unit when the image data is selected by the selection unit.

7.  An image display system, comprising:

    a first electronic device which includes;

    an image-capturing unit that captures an image of a subject, and generates image data,
    a sensor unit that detects a physical quantity given by a user,
    a calculation unit that calculates a score representing an emotional state of the user based on the physical quantity detected by the sensor unit and the image data generated by the image-capturing unit,
    a storage unit that correlatively stores the image data generated by the image-capturing unit and the score calculated by the calculation unit,
    a selection unit that selects the image data based on the score stored in the storage unit, and
    a transmission unit that transmits the image data selected by the selection unit; and
    a display apparatus that includes a plurality of electronic devices which receives the image data from the first electronic device and displays the received image data.

8. The image display system according to Claim 7, wherein the transmission unit of the first electronic device transmits an evaluation parameter which indicates a type of the score along with the selected image data, and

wherein the display apparatus that includes a plurality of electronic devices receives the evaluation parameter along with the image data from the first electronic device, and performs a processing based on the received evaluation parameter.

9. An image selection method, comprising:

a step of calculating a score representing an emotional state of the user based on the physical quantity detected by the sensor and the image data generated by the image-capturing unit, by the electronic device which includes an image-capturing unit that captures an image of a subject and generates image data, and a sensor unit that detects a physical quantity given by a user;

a step of correlatively storing the image data generated by the image-capturing unit and the score calculated by the calculation unit, by the electronic device; and

a step of selecting the image data based on the score stored by the electronic device.

FIG. 1

ELECTRONIC DEVICE — 100

SENSOR UNIT — 110

- ACCELERATION SENSOR — 111
- PRESSURE-SENSITIVE SENSOR — 112
- TEMPERATURE SENSOR — 113
- HUMIDITY SENSOR — 114
- MICROPHONE — 115
- GYRO SENSOR — 119
- IMAGE-CAPTURING UNIT — 116
- IMAGE ANALYZER — 117
- TOUCH PANEL — 118

COMMUNICATION UNIT — 120

CONTROLLER — 130
- CALCULATION UNIT — 131
- SELECTION UNIT — 132
- UPDATE UNIT — 133

DISPLAY UNIT — 160

CLOCK — 170

POSITION DETECTOR — 180

STORAGE UNIT — 140

POWER SOURCE UNIT — 150

# FIG. 2

| IMAGE DATA | IMAGE-CAPTURE DATE | IMAGE-CAPTURE LOCATION | IMAGE-CAPTURE SCORE | DISPLAY SCORE |
|---|---|---|---|---|
| a1.jpg | 2011/01/01 | LOCATION X | 90 | 70 |
| a2.jpg | 2011/01/02 | LOCATION Y | 80 | 50 |
| ... | ... | ... | ... | ... |

# FIG. 3

| DATE | DATE SCORE |
|---|---|
| 2011/01/01 | 50 |
| ... | ... |

# FIG. 4

| LOCATION | LOCATION SCORE |
|---|---|
| LOCATION X | 30 |
| ... | ... |

# FIG. 5

| EVENT | DATE | EVENT SCORE |
|---|---|---|
| USER B' s BIRTHDAY | 2000/01/01 | 90 |
| ... | ... | ... |

## FIG. 6

| EVALUATION PARAMETER | WEIGHT |
|---|---|
| IMAGE-CAPTURE SCORE | 1 |
| DISPLAY SCORE | 1 |
| DATE SCORE | 2 |
| LOCATION SCORE | 1 |
| ... | ... |

## FIG. 7

| DATE AND TIME | SCORE | COMBINATIONS OF WEIGHTS |
|---|---|---|
| 2011/01/01 12:24 | 20 | $w_1=1, w_2=2, w_3=1, w_4=1$ |
| 2011/01/01 15:00 | 70 | $w_1=1, w_2=1, w_3=2, w_4=1$ |
| ... | ... | ... |

## FIG. 8

```
        START

         │
         ▼
┌──────────────────┐  ╭S101
│  CAPTURE IMAGE   │
└──────────────────┘
         │
         ▼
┌──────────────────┐  ╭S102
│  CALCULATE SCORE │
└──────────────────┘
         │
         ▼
┌──────────────────┐  ╭S103
│      STORE       │
└──────────────────┘
         │
         ▼
        END
```

## FIG. 9

```
        START

         │
         ▼
┌──────────────────┐  ╭S201
│  DISPLAY IMAGE   │
└──────────────────┘
         │
         ▼
┌──────────────────┐  ╭S202
│  CALCULATE SCORE │
└──────────────────┘
         │
         ▼
┌──────────────────┐  ╭S203
│      STORE       │
└──────────────────┘
         │
         ▼
        END
```

# FIG. 10

```
        ( START )
            │
            ▼
          S301
     ◇ IS EVENT PRESENT? ◇───NO──────────┐
            │                             │
           YES                            │
            │                             │
            ▼                             │
          S302                            │
     ◇  IS                               │
        EVENT SCORE >                     │
        THRESHOLD VALUE α ◇───NO──────────┤
            ?                             │
            │                             │
           YES                            │
            │                    S303     │
            ▼                             │
   ┌──────────────────────────────────┐  │
   │ SET EVENT AS EVALUATION PARAMETER,│  │
   │ AND MAKE WEIGHT OF EVENT BE LARGE │  │
   └──────────────────────────────────┘  │
            │                             │
            ◄─────────────────────────────┘
            │
            ▼                    S304
   ┌──────────────────────────────────┐
   │      CALCULATE EVALUATION VALUE   │
   └──────────────────────────────────┘
            │
            ▼                    S305
   ┌──────────────────────────────────┐
   │           SELECT IMAGE            │
   └──────────────────────────────────┘
            │
            ▼                    S306
   ┌──────────────────────────────────┐
   │           DISPLAY IMAGE           │
   └──────────────────────────────────┘
            │
            ▼                    S307
   ┌──────────────────────────────────┐
   │             FEEDBACK              │
   └──────────────────────────────────┘
            │
            ▼
        (  END  )
```

# FIG. 11

100A; ELECTRONIC DEVICE        100B; ELECTRONIC DEVICE

S401      IMAGE DATA

S402

| CALCULATE SCORE |

S403

| STORE |

# FIG. 12

100A; ELECTRONIC DEVICE        100B; ELECTRONIC DEVICE

S501     REQUEST FOR SCORE

S502     SCORE

S503

| CALCULATE TOTAL SCORE |

S504

| DISPLAY IMAGE SELECTION |

FIG. 13

# FIG. 14

100A;ELECTRONIC DEVICE          200;CORK BOARD          100B;ELECTRONIC DEVICE

S601
REQUEST FOR SCORE

S602
SCORE

S603
CALCULATE TOTAL SCORE

S604
SELECT IMAGE

S605
IMAGE DATA

S606
DISPLAY IMAGE

S607
IS EVENT PRESENT?
NO
YES

S608
DISPLAY MESSAGE

GIFT MESSAGE
S609

# FIG. 15

100;ELECTRONIC DEVICE                    200;CORK BOARD

S701
SELECT IMAGE

S702          IMAGE DATA

S703
DISPLAY IMAGE

S704
ANALYZE IMAGE

S705
ANALYZE EVALUATION
PARAMETER

S706
SELECT ADVERTISEMENT

S707          ADVERTISEMENT

<table>
<tr><td colspan="2" align="center">**INTERNATIONAL SEARCH REPORT**</td><td colspan="2">International application No.<br>PCT/JP2012/055429</td></tr>
</table>

| A. | CLASSIFICATION OF SUBJECT MATTER |
|---|---|

*H04N7/173*(2011.01)i, *G06F3/01*(2006.01)i, *G06F3/048*(2006.01)i, *G06F17/30* (2006.01)i, *G09F19/00*(2006.01)i

According to International Patent Classification (IPC) or to both national classification and IPC

| B. | FIELDS SEARCHED |
|---|---|

Minimum documentation searched (classification system followed by classification symbols)
H04N7/173, G06F3/01, G06F3/048, G06F17/30, G09F19/00

Documentation searched other than minimum documentation to the extent that such documents are included in the fields searched

| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2008-263274 A   (Sony Corp.),<br>30 October 2008 (30.10.2008),<br>paragraphs [0020], [0023] to [0026], [0032],<br>[0063] to [0065], [0074]<br>& US 2008/0253695 A1    & CN 101286196 A | 1-9 |
| Y | JP 2005-064839 A   (Sony Corp.),<br>10 March 2005 (10.03.2005),<br>paragraphs [0063] to [0083], [0157]<br>(Family: none) | 1-9 |
| Y | JP 2004-213623 A   (Eastman Kodak Co.),<br>29 July 2004 (29.07.2004),<br>paragraphs [0041], [0146]<br>& US 2004/0101178 A1    & EP 1445938 A1<br>& CN 1514399 A          & HK 1066310 A | 2-6,8 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 March, 2012 (22.03.12) | 03 April, 2012 (03.04.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

<table>
<tr><td colspan="2" align="center">**INTERNATIONAL SEARCH REPORT**</td><td>International application No.<br>PCT/JP2012/055429</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2010-016482 A  (Sony Corp.),<br>21 January 2010 (21.01.2010),<br>paragraph [0058]<br>& US 2010/0014840 A1    & EP 2141836 A2<br>& CN 101621668 A | 3-6 |
| Y | JP 2005-250977 A  (Nikon Corp.),<br>15 September 2005 (15.09.2005),<br>paragraph [0024]<br>(Family: none) | 5-6 |

Form PCT/ISA/210 (continuation of second sheet) (July 2009)

**EP 2 683 162 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011047596 A
- JP H11134087 B